# EUROPÄISCHE PATENTSCHRIFT

(11) **EP 2 580 572 B1**
(45) Veröffentlichungstag und Bekanntmachung des Hinweises auf die Patenterteilung: **09.09.2015**
(21) Anmeldenummer: 10726863.3
(22) Anmeldetag: 09.06.2010
(51) Int. Cl.: G01N 17/00, B01L 1/00, B01L 7/02

(54) **VORRICHTUNG UND VERFAHREN ZUR REAKTIONSBELASTUNG EINER PROBE IN EINER MITTELS FLUSSIGKEITSBAD TEMPERIERTEN TESTKAMMER**
APPARATUS AND METHOD FOR REACTION STRESS OF A SAMPLE IN A TEST CHAMBER THAT IS TEMPERATURE-CONTROLLED USING A LIQUID BATH
DISPOSITIF ET PROCÉDÉ D'ESSAI RÉACTIONNEL D'UN ÉCHANTILLON DANS UNE CHAMBRE D'ESSAI THERMORÉGULÉE AU MOYEN D'UN BAIN LIQUIDE

(43) Veröffentlichungstag der Anmeldung: 17.04.2013
(73) Patentinhaber: Erichsen GmbH & Co. KG, 58675 Hemer (DE)
(72) Erfinder: HASLEHNER, Gerald, A-4052 Ansfelden (AT); ISTOK, Thomas, A-4531 Kematen (AT); STELLNBERGER, Karl-Heinz, A-4420 Linz (AT); FLEISCHANDERL, Martin, A-4261 Rainbach im Mühlkreis (AT)
(74) Vertreter: Patentanwälte Dörner & Kötter PartG mbB
(86) Internationale Anmeldenummer: PCT/AT2010/000205
(87) Internationale Veröffentlichungsnummer: WO 2011/153558

(56) Entgegenhaltungen:
- DE-A1- 2 530 713
- DE-A1- 3 203 471
- DE-U1-202006 003 844
- "ASTM Standard Designation: G48 - 03. Standard test methods for pitting and crevice corrosion resistance of stainless steels and related alloys by use of ferric chloride solution" ASTM DESIGNATION, ASTM INTERNATIONAL, US, Bd. G48 - 03, 1. Januar 2003 (2003-01-01), Seiten 186-196, XP009122313

## Beschreibung

### Technisches Gebiet

Die Erfindung bezieht sich auf eine Vorrichtung zur Reaktionsbelastung, insbesondere Korrosionsbelastung, wenigstens einer Probe mit einem einen Belastungsraum aufweisenden Gehäuse, mit einem im Belastungsraum vorgesehenen Probenhalter für die Probe, mit einem eine Ultraschallquelle aufweisenden Zerstäuber zur zumindest teilweisen Bildung eines die Probe belastenden Aerosols und mit einer Temperiereinrichtung zum Einstellen der Temperaturbelastung der Probe.

### Stand der Technik

Um die Temperaturbelastung einer mit einem Aerosol beaufschlagten Probe einstellen zu können, ist es aus dem Stand der Technik bekannt (DE 20 2006 003 844 U1), das von einem Ultraschalizerstäuber erzeugte Aerosol noch vor Kontakt mit der Probe zu erwärmen. Zu diesem Zweck weist diese Vorrichtung eine Temperiereinrichtung mit einem Keramikheizelement auf, das im Strömungsweg einer, mehrere Leiteinrichtungen aufweisenden Strömungseinrichtung angeordnet ist und auf das das Aerosol aufströmt. Von Nachteil hat sich herausgestellt, dass sich die von Aerosolen, aufweisend feste und/oder gasförmige Schwebeteilchen, bekannten Schwebeteilchen vergleichsweise leicht an Begrenzungsflächen des Strömungswegs ablagern können. Es kommt daher im Laufe der Reaktionsbelastung zu vergleichsweise großen Verkrustungen, insbesondere im Bereich der Temperiereinrichtung, was insbesondere bei Aerosolen mit salzhaltigen Schwebeteilchen beobachtet werden konnte. Solche Verkrustungen können dann in weitere Folge dazu führen, dass sich sowohl die Aerosol- als auch die Temperaturbelastung der Probe während der Reaktionsbelastung unerwünscht verändert, was in weiterer Folge zu nicht nachvollziehbaren bzw. reproduzierbaren Vergleichsergebnissen führen kann. Derartige Vorrichtungen sind daher für vergleichsweise zeitlich lange Reaktionsbelastung in der Regel ungeeignet. Außerdem muss beim Entfernen eventueller Ablagerungen eine vergleichsweise aufwendige Wartung in Kauf genommen werden, was insbesondere auch durch den konstruktiv aufwendigen Strömungsweg nicht vereinfacht wird.

Des Weiteren ist aus dem Stand der Technik bekannt (DE 25 37 429 A1), mit Hilfe eines eine Düse aufweisenden Zerstäubers eine Probe einer Aerosolbelastung zu unterwerfen. Die zur Aerosolbildung benötigte Druckluft wird gegenüber der Temperatur im Belastungsraum erhöht erwärmt, um damit dem verdampfungsbedingten Abkühlen entgegen wirken zu können. Am Boden des Gehäuses des Belastungsraums ist eine Temperiereinrichtung mit einer Heizschlange vorgesehen. Anhand der Temperiereinrichtung wird die Temperaturbelastung der Probe eingestellt. Außerdem wärmt die Temperiereinrichtung die Sole des Zerstäubers vor. Von Nachteil bei Zerstäubern mit Düsen ist, dass es bei längeren Reaktionsbelastungen bekanntermaßen schnell zur Verstopfungen bzw. Ablagerungen der bzw. in der Düse kommen kann, was zur einem veränderten Sprühbild führen und damit einen reproduzierbaren Belastungsablauf nicht gewährleistet kann.

Aus DE 3203471 A1 ist grundsätzlich bekannt, eine hohe Temperaturkonstanz in einem Materialprüfschrank mittels eines Betriebswasserbads zu erreichen.

### Darstellung der Erfindung

Die Erfindung hat sich daher die Aufgabe gestellt, ausgehend vom eingangs geschilderten Stand der Technik, eine Vorrichtung und ein Verfahren zu schaffen, die bzw. bei dem während der Reaktionsbelastung der Probe die Temperatur- und/oder Aerosolbelastung vergleichsweise genau eingestellt werden kann, um so einen reproduzierbaren Belastungsablauf gewährleisten zu können. Außerdem soll die Vorrichtung konstruktiv einfach und wartungsfreundlich ausgebildet und das Verfahren einfach in der Handhabung sein.

Die Erfindung löst die gestellte Aufgabe hinsichtlich der Vorrichtung dadurch, dass der Zerstäuber insbesondere aus einer salzhaltigen Flüssigkeit das Aerosol erzeugt, und dass die Temperiereinrichtung ein in der Temperatur einstellbares und insbesondere als Verdunster wirkendes Flüssigkeitsbad aufweist, das im Belastungsraum zumindest teilweise angeordnet und über das die Temperaturbelastung der Probe im wesentlichen einstellbar ist.

Weist die Temperiereinrichtung ein in der Temperatur einstellbares Flüssigkeitsbad auf, das im Belastungsraum zumindest teilweise angeordnet und über das die Temperaturbelastung der Probe im Wesentlichen einstellbar ist, dann kann ermöglicht werden, dass es trotz fortschreitender Reaktionsbelastung der Probe zu keinen unerwünschten Veränderungen in der Temperatur- und/oder Aerosolbelastung der Probe kommen kann. Das Flüssigkeitsbad kann nämlich dazu dienen, eventuell ausfallende Schwebeteilchen des Aerosols aufzunehmen, so dass mit einer verminderten Gefahr an Verkrustungen an der Temperiereinrichtung zu rechnen ist. Es kann daher im Gegensatz zum Stand der Technik erfindungsgemäß für gleich bleibende Parameter beim Einstellen der Temperaturbelastung der Probe über die Dauer der Reaktionsbelastung gesorgt werden, was sich besonders deutlich bei Aerosolen aus einer salzhaltigen Flüssigkeit, beispielsweise einer Sole, gezeigt hat. Außerdem kann das Flüssigkeitsbad auch die Parameter der Aerosolbelastung positiv beeinflussen. Es hat sich nämlich herausgestellt, dass durch die vergleichsweise gleichmäßige Temperaturabgabe des Flüssigkeitsbads die Stabilität des Aerosols positiv beeinflusst werden kann, was insbesondere mit den, von Ultraschallzerstäubern erzeugten feinen Aerosolen zur Geltung kommen kann. Außerdem konnte festgestellt werden, dass durch das Flüssigkeitsbad im Belastungsraum die Temperaturbelastung der Probe in vergleichsweise engen Grenzen gehalten werden kann, weil eventuell auftretende Temperaturschwankungen durch die Trägheit des Flüssigkeitsbads auf einfache Weise ausgeglichen werden können. Besonders von Vorteil kann diese Trägheit jedoch dann sein, wenn bei einem Abschalten des Zerstäubers zum Zwecke der Beobachtung des Reaktionsfortschritts mit erhöhten Schwankungen in der Temperaturbelastung der Probe zu rechnen ist. Die erfindungsgemäße Vorrichtung zeichnet sich daher auch dadurch aus, dass Beobachtungen des Reaktionsfortschritts auf einen reproduzierbaren Belastungsablauf einen vergleichsweise geringen Einfluss haben. Da mit einem Austauschen der Flüssigkeit des Flüssigkeitsbads auf einfache Weise der Belastungsraum im Wesentlichen gereinigt werden kann, kann ebenso eine konstruktiv einfache und wartungsfreundliche Vorrichtung geschaffen werden. Das Flüssigkeitsbad kann auch insbesondere als Verdunster zur Einhaltung von engen Grenzen bei der Luftfeuchtigkeit im Belastungsraum dienen, was unter anderem für eine stabile und genau einstellbare Aerosolbelastung der Probe von Vorteil sein kann. Erfindungsgemäß kann daher das Flüssigkeitsbad im Belastungsraum nicht nur eine konstruktive Einfachheit der Vorrichtung schaffen sondern auch für eine stabile und genaue Temperaturbelastung der Proben sorgen sowie zusätzlich auch die Stabilität und Genauigkeit der Aerosolbelastung verbessern.

Um zumindest teilweise das Aerosol vor Beaufschlagung der Probe in seiner Temperatur einstellen zu können, kann vorgesehen werden, dass zumindest teilweise das Aerosol vor Reaktionsbelastung der Probe auf das Flüssigkeitsbad aufströmt. Dies kann der Vergleichmäßigung der Temperaturbelastung der Probe dienlich sein, insbesondere auch während des Anfangs der Reaktionsbelastung, bei dem der Belastungsraum noch frei von Aerosol ist. Dabei kann es unerheblich sein, ob das Aerosol einer aufgezwungenen oder freien Strömung unterworfen ist.

Ist zumindest unterhalb der Probe das Flüssigkeitsbad vorgesehen, dann kann auf konstruktive einfache Weise die Einstellbarkeit der Temperatur- und/oder Aerosolbelastung der Probe verbessert werden, in dem die Thermik aufgrund des Flüssigkeitsbads zur Vergleichsmäßigung bzw. Homogenisierung der Parameter der Reaktionsbelastung im Bereich der Probe verwendet werden kann.

Einfache Konstruktionsverhältnisse ergeben sich, wenn die Temperiereinrichtung eine im Flüssigkeitsbad angeordnete elektrische Heizung aufweist.

Um Ablagerungen durch das Aerosol im Belastungsraum zu verringern, hat sich als besonders vorteilhaft herausgestellt, wenn der Zerstäuber im Belastungsraum derart vorgesehen ist, dass das vom Zerstäuber gebildete Aerosol ungehindert zur Probe strömen kann.

Für eine gleichmäßige Verteilung bzw. Verwirbelung des Aerosols kann ein im Belastungsraum angeordneter Ventilator sorgen. Außerdem kann durch solch eine Umwälzbewegung ein homogenes Aerosol zur Belastung der Probe geschaffen werden. Vorzugsweise kann der Ventilator oberhalb des Zerstäubers angeordnet sein.

Weist das Gehäuse eine wenigstens teilweise transparente Seitenwand auf, auf die eine im Gehäuse vorgesehene Sprüheinrichtung der Vorrichtung zum Aufsprühen von Flüssigkeit gerichtet ist, dann kann im Gegensatz zum Stand der Technik auch während des Ablaufs der Reaktionsbelastung vergleichsweise schnell eine Beobachtung des Reaktionsfortschritts vorgenommen werden. Die eventuell beschlagene transparente Seitenwand kann nämlich durch das Besprühen mit Flüssigkeit einfach gereinigt werden, sodass die Probe zur Beobachtung nicht aus dem Gehäuse genommen werden muss, was nicht nur unerwünschte Veränderungen der Temperaturbelastung der Probe sondern auch eine Beeinträchtigung der Belastungsparameter im Belastungsraum vermeidet. Außerdem kann mit einer derartigen Sprüheinrichtung je nach Steuerung auch eine automatische Beobachtung des Reaktionsfortschritts vorgenommen werden, beispielsweise mit Hilfe von Geräten zur Bildaufzeichnung, was die Vorrichtung vergleichsweise bedienungsfreundlich machen kann.

Einfache konstruktive Verhältnisse ergeben sich, wenn die Sprüheinrichtung zumindest teilweise Flüssigkeit vom Flüssigkeitsbad aufnimmt, weil so auf eine externe Versorgung der Sprüheinrichtung mit Sprühwasser verzichtet werden kann. Außerdem kann eine Beeinträchtigung der Temperatur des Flüssigkeitsbads durch ein Eintragen von anders temperierter Flüssigkeit vermieden werden.

Ist eine Pumpe der Sprüheinrichtung außerhalb des Gehäuses angeordnet, wobei die Saugleitung der Pumpe mit wenigstens einem Bodenablauf des Flüssigkeitsbads verbunden ist, dann kann vorteilhaft ein Temperaturverlust vermieden werden, weil die Bodenabläufe für einen gasdichten Abschluss des Belastungsraums sorgen können.

Um die Einflüsse von außen auf die Reaktionsbelastung der Probe so gering wie möglich zu halten, kann der Belastungsraum des Gehäuses gasdicht ausgeführt sein. Mit einer derartigen Ausführung wird es auch dann auf einfache konstruktive Weise möglich, in den Belastungsraum reaktionsförderliches oder reaktionshemmendes Gas einzutragen. Zu diesem Zweck kann das Gehäuse eine Zuleitung zum Eintragen von Gas aufweisen. Insbesondere Sauerstoff hat sich als besonders reaktionsfördernd bei Korrosionsbelastungen herausgestellt, wobei sich im Gegensatz dazu Stickstoff als reaktionshemmend ausgezeichnet hat.

Steht das Gehäuse auf Rädern, dann kann auf einfache Weise für eine Mobilität der Vorrichtung gesorgt werden.

Weist die Vorrichtung ein auf die transparente Seitenwand gerichtetes und außerhalb des Belastungsraums angeordnetes Bildaufzeichnungsgerät auf, dann kann damit der Reaktionsverlauf der Proben im Belastungsraum aufgenommen werden. Durch Kondensat auf der transparenten Seitenwand kann jedoch die Sicht auf die Proben beeinträchtigt sein, so dass die Vorrichtung eine Steuereinrichtung aufweisen kann, die mit dem Bildaufzeichnungsgerät, dem Zerstäuber und der Sprüheinrichtung zur Ansteuerung verbunden ist, wobei die Steuereinrichtung in Abhängigkeit der Ansteuerung des Zerstäubers mit der Sprüheinrichtung und dem Bildaufzeichnungsgerät zum Ansteuern verbindet, um damit die transparente Seitenwand zu reinigen bzw. damit zu ermöglichen, den Reaktionsverlauf aufzeichnen zu können.

Die Erfindung löst die gestellte Aufgabe hinsichtlich des Verfahrens dadurch, dass über die Temperatur eines im Belastungsraum angeordneten Flüssigkeitsbads die Temperaturbelastung der Probe im Wesentlichen eingestellt wird.

Wird über die Temperatur eines im Belastungsraum angeordneten Flüssigkeitsbads die Temperaturbelastung der Probe im Wesentlichen eingestellt, dann kann erfindungsgemäß eine einfache Handhabung ermöglicht werden, weil Störungen in der Temperaturbelastung der Probe über die Trägheit des Flüssigkeitsbads ausgleichbar sind. Aufwendige Regelmechanismen sind so zu vermeiden, was zu einer einfachen Handhabung des Verfahrens zur Reaktionsbelastung führt. Außerdem kann dadurch die Temperaturbelastung der Probe stets in engen Grenzen gehalten werden, was unter anderem auch für eine verbesserte Stabilität des Aerosols sorgen kann, so dass es insgesamt zu einer verbesserten Reproduzierbarkeit des Verlaufs der Reaktionsbelastung kommen kann.

Zur Vergleichsmäßigung der Reaktionsbedingungen kann ebenso beitragen, dass über das als Verdampfer wirkende Flüssigkeitsbad die Luftfeuchtigkeit im Belastungsraum im Wesentlichen eingestellt wird.

Das Verfahren kann in seiner Reproduzierbarkeit weiter verbessert werden, wenn zumindest teilweise das Aerosol auf das Flüssigkeitsbad strömt, bevor es die Probe reaktionsbelastet, weil dann nicht zu befürchten ist, dass das zur Probe strömende Aerosol zu einer unerwünschten Veränderung der Temperaturbelastung führen kann.

Als besonders vorteilhaft hat sich für eine reproduzierbare Reaktionsbelastung, insbesondere Korrosionsbelastung, wenigstens einer in einem Belastungsraum angeordneten Probe herausgestellt, wenn ein Flüssigkeitsbad zum Einstellen einer Temperaturbelastung der Probe verwendet wird, wobei die Probe zusätzlich einer Aerosolbelastung unterworfen wird, welches Aerosol mit Hilfe von Ultraschallschwingungen aus einer insbesondere salzhaltigen Flüssigkeit zerstäubt wird.

Außerdem kann die Reproduzierbarkeit der Reaktionsbelastung verbessert werden, wenn das als Verdampfer wirkende Flüssigkeitsbad zum Einstellen der Luftfeuchtigkeit im Belastungsraum verwendet wird.

### Kurze Beschreibung der Zeichnung

In den Figuren ist der Erfindungsgegenstand beispielsweise anhand eines Ausführungsbeispiels dargestellt. Es zeigen
- Fig. 1: eine teilweise aufgerissene Frontansicht auf die Vorrichtung,
- Fig. 2: eine teilweise aufgerissene Seitenansicht auf die Vorrichtung nach Fig. 1 und
- Fig. 3: ein Schaltschema zur Vorrichtung nach Fig. 1 und 2.

### Weg zur Ausführung der Erfindung

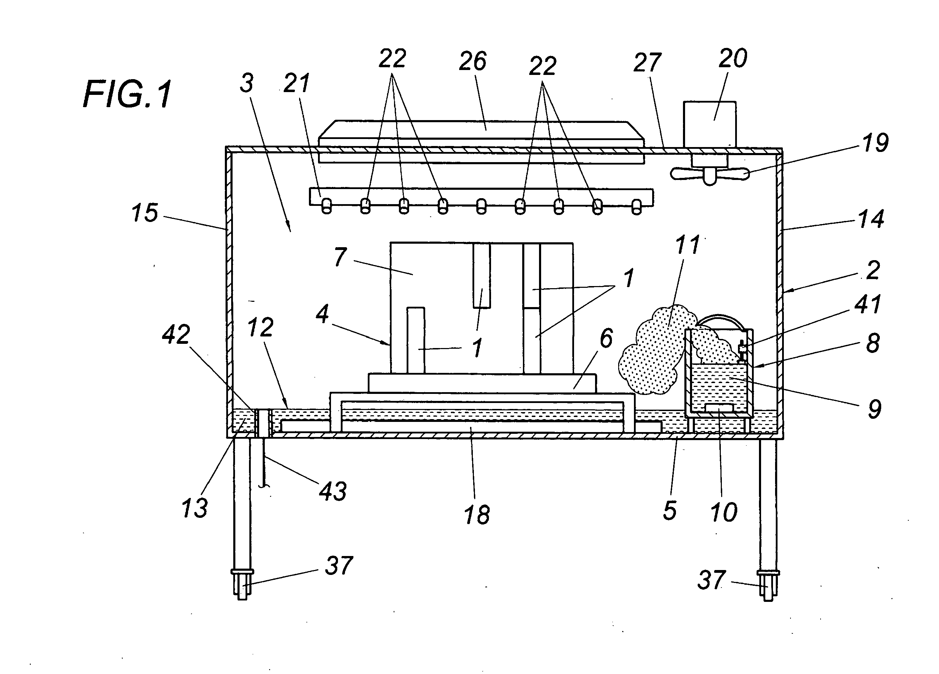

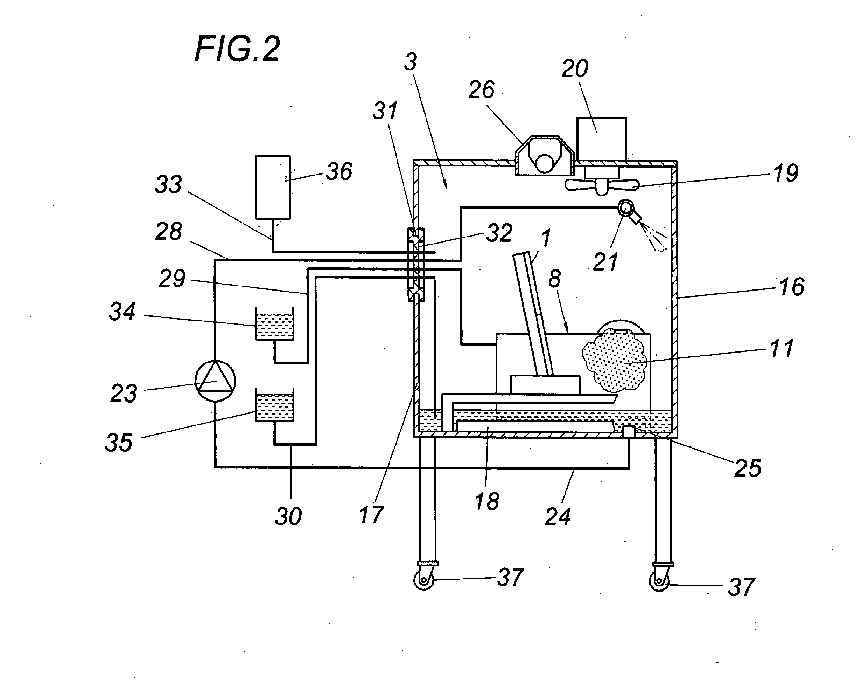

Die nach Fig. 1 beispielsweise dargestellte Vorrichtung zur Reaktionsbelastung von Proben 1 weist ein Gehäuse 2 auf, das einen Belastungsraum 3 ausbildet. Im Belastungsraum 3 ist ein Probenhalter 4 vorgesehen, der am Gehäuseboden 5 mit seinem Probenhaltersockel 6 befestigt ist und dessen Probenhalterplatte 7 die Proben 1 hält. Die Vorrichtung weist weiter einen Zerstäuber 8 auf, der eine salzhaltige Flüssigkeit 9, insbesondere eine Sole, mit Hilfe einer Ultraschallquelle 10 beaufschlagt, so dass sich ein Aerosol 11 bildet, mit dem die Proben 1 reaktionsbelastet werden können. Anhand einer Temperiereinrichtung 12 wird die Temperaturbelastung der Proben 1 eingestellt. Um eine genau einstellbare Temperatur- und/oder Aerosolbelastung der Proben 1 zu ermöglichen, weist die Temperiereinrichtung 12 ein in der Temperatur regelbares Flüssigkeitsbad 13 auf, das im Belastungsraum 3 angeordnet ist. Über das Flüssigkeitsbad 13 wird die Temperaturbelastung der Proben 1 im Wesentlichen eingestellt. Unerwünschte Temperaturänderungen können so kompensiert werden, was beispielsweise durch in diesen Bereich eindringendes Aerosol 11 der Fall sein kann. Vorteilhaft ist, dass trotz Temperaturbeaufschlagung des Aerosols 11 nicht mit Verkrustungen an der Temperiereinrichtung 12 gerechnet werden muss. Eventuell an der Temperiereinrichtung 12 ausfallende Schwebeteilchen des Aerosols 11 können nämlich von der Flüssigkeit des Flüssigkeitsbads 13 aufgenommen werden, so dass unabhängig von der Dauer der Reaktionsbelastung die Temperaturbelastung der Proben 1 stets in engen Grenzen gehalten werden kann. Des Weiteren hat sich als vorteilhaft herausgestellt, wenn das Flüssigkeitsbad 13 aufgrund der Trägheit besonders für konstante Temperaturverhältnisse im Bereich der Proben 1 sorgen kann. Einfache Konstruktionsverhältnisse ergeben sich, wenn das Flüssigkeitsbad 13 vom Gehäuseboden 5 und von den Gehäuseseiten 14, 15, 16 und 17 begrenzt wird, was der Figur 1 und Figur 2 zu entnehmen ist. Vorteilhaft ist Wasser für das Flüssigkeitsbad 13 vorgesehen, was getrennt von der zu zerstäubenden Flüssigkeit 9 gehalten wird, um so eine Vermischung beider Flüssigkeiten auszuschließen. Vorstellbar ist jedoch, für das Flüssigkeitsbad 13 auch eine salzhaltige Flüssigkeit 9 zu verwenden, und dann die Ultraschallquelle 10 des Zerstäubers 8 in diesem Flüssigkeitsbad 13 wirken zu lassen, um so die Konstruktion zu vereinfachen.

Das Aerosol 11 kann auch teilweise über das Flüssigkeitsbad 13 zur Probe strömen, was zur Vergleichmäßigung der Temperaturbelastung der Proben 1 genützt werden kann, wenn vortemperiertes Aerosol 11 in den Bereich der Proben 1 eindringt, in welchem Bereich der Probe eine Temperaturbelastung eingestellt ist.

Zumindest unterhalb der Proben 1 ist das Flüssigkeitsbad 13 vorgesehen, wodurch die Reaktionsbedingungen im Bereich der Proben 1 besonders genau eingestellt werden können.

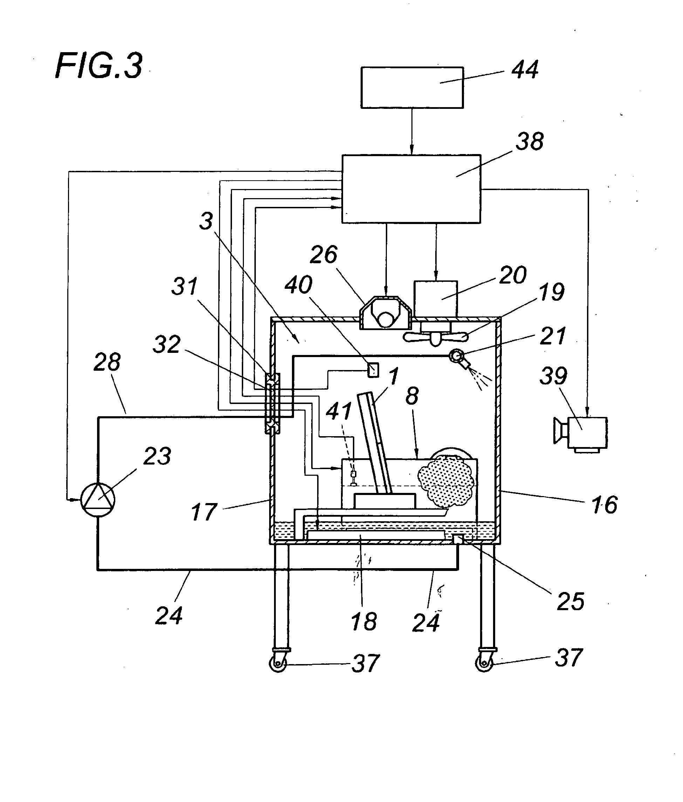

Die Temperiereinrichtung 12 weist weiter eine elektrische Heizung 18 zum Einstellen der Temperatur des Flüssigkeitsbads 13 auf. Diese elektrische Heizung 18 ist im Flüssigkeitsbad 13 angeordnet und wirkt mit einer Temperatursteuerung zusammen, die in Fig. 3 näher erläutert wird.

Der Zerstäuber 8 ist im Gehäuse 2 vorgesehen, und zwar im Belastungsraum 3. Zwischen Zerstäuber 8 und Proben 1 sind keine Leitvorrichtungen vorgesehen, so dass das vom Zerstäuber 8 gebildete Aerosol 11 ungehindert zu den Proben 1 strömen kann. Verkrustungen innerhalb des Belastungsraums 3 können daher gering gehalten werden.

Durch einen im Belastungsraum 3 über dem Zerstäuber 8 angeordneten Ventilator 19 kann das Aerosol 11 gleichmäßig im Belastungsraum 3 verteilt werden. Außerdem kann so für eine Vergleichsmäßigung der Temperatur des Aerosols 11 gesorgt werden, was die Genauigkeit in der Einstellung der Temperatur- und/oder Aerosolbelastung der Proben 1 verbessern kann. Zum Antrieb des Ventilators 19 ist ein außerhalb des Gehäuses 2 vorgesehener Motor 20 vorgesehen, damit die Abwärme des Motors 20 nicht zu einer Erwärmung des Belastungsraums 3 führen kann.

Die Seitenwand 16 des Gehäuses 2 ist transparent ausgeführt, wobei auf diese eine im Gehäuse 2 vorgesehene Sprüheinrichtung 21 zum Aufsprühen von Flüssigkeit gerichtet ist. Zu diesem Zweck weist die balkenförmige Sprüheinrichtung 21 mehrere zueinander in Längsrichtung der Sprüheinrichtung 21 versetzte Düsen 22 auf.

Figur 2 ist zusätzlich zu Figur 1 zu entnehmen, dass die Sprüheinrichtung 21 zumindest teilweise Flüssigkeit vom Flüssigkeitsbad 13 aufnimmt, wodurch eine besonders autarke Vorrichtung geschaffen werden kann. Die Pumpe 23 der Sprüheinrichtung 21 ist außerhalb des Gehäuses 2 angeordnet. Die Saugleitung 24 der Pumpe 23 ist mit wenigstens einem Bodenablauf 25 des Flüssigkeitsbads 13 verbunden. Mit einem Betätigen der Sprüheinrichtung 21 kann so auf einfache Weise ein eventueller Beschlag der transparenten Seitenwand 16 entfernt werden, so dass die Reaktionsbelastung bzw. der Fortschritt der Korrosionsbelastung der Proben 1 beobachtet werden kann. Diese Maßnahmen sind auch autark durchführbar, so dass auch bei längeren Reaktionsbelastungen automatisch bzw. über Betätigung der Sprüheinrichtung 21 diese Belastungen dokumentiert werden können. Vorzugsweise ist während dieser Dokumentationszeit der Zerstäuber 8 abgeschaltet, um nicht die Sicht aufgrund des Aerosols 11 zu behindern. Für besondere Lichtverhältnisse sorgt eine Lampe 26, die am Gehäusedeckel 27 befestigt ist und teilweise aus dem Gehäuse 2 ragt.

Um äußere Einflüsse auf die Reaktionsbelastung verringern zu können, ist das Gehäuse 2 gasdicht ausgeführt. Zu diesem Zweck führen beispielsweise die Zuleitung 28 für den Sprühbalken 21, die Zuleitung 29 für die Sole des Zerstäubers 8 und die Zuleitung 30 für die Flüssigkeit des Flüssigkeitsbads 13 über eine Öffnungen 31 durch die Seitenwand 17, wobei eine Dichtung 32 für einen gasdichten Abschluss der Öffnung 31 sorgt. Ebenso dadurch führt eine Zuleitung 33 zum eventuellen Eintragen von Gasen, insbesondere von Sauerstoff, die der Reaktionsbeschleunigung förderlich sind. Die Zuleitung 29 zieht Flüssigkeit im gegeben Fall aus einem außerhalb des Gehäuses 2 angeordneten Behälter 34, um damit einen konstanten Solestand im Zerstäuber 8 gewährleisten zu können. Die Zuleitung 30 zieht Flüssigkeit im gegeben Fall aus einem außerhalb des Gehäuses 2 angeordneten Behälter 35, um damit für einen konstanten Pegel des Flüssigkeitsbads 13 zu sorgen. Die Zuleitung 33 ist an einen Gasbehälter 36 angeschlossen, um im gegeben Fall Gas in den Reaktionsraum 3 eintragen zu können.

Zum Zwecke der Mobilität der Vorrichtung steht das Gehäuse 2 auf Rädern 37. Gemäß Fig. 3 wird in schematischer Ansicht die Steuerung der nach Fig. 1 und Fig. 2 gezeigten Vorrichtung dargestellt. Zur Steuerung der Vorrichtung weist diese eine Steuereinrichtung 38 auf, die mit einem Bildaufzeichnungsgerät 39, mit dem Motor 20 des Ventilators 19, mit der Lampe 26, mit dem Zerstäuber 8, mit der Heizung 18, mit dem Temperatursensor 40 und mit der Pumpe 23 der Sprüheinrichtung 21 verbunden ist. In Abhängigkeit der Ansteuerung des Zerstäubers bzw. des Ventilators 19 kann nun die Steuereinrichtung 38 die Pumpe 23 zeitgesteuert betätigen, damit für eine Bildaufnahme klare Sicht auf den Reaktionsfortschritt der Proben 1 gegeben ist. Zur Zeitsteuerung ist der Steuereinrichtung 38 ein Zeitglied 44 zugeordnet. Die transparente Seitenwand 16 kann dann -beim abgeschalteten Zerstäuber 8 und abgeschalteten Ventilator 19- mit Hilfe der Sprüheinrichtung 21 von eventuellem Kondensat befreit werden, so dass dem Bildaufzeichnungsgerät 39 eine freie Sicht auf die Proben 1 zur Aufzeichnung des Reaktionsfortschritts möglich ist. Außerdem kann sich ebenso durch das Zuschalten der Lampe 26 die Sicht auf die Proben verbessern.

Die Steuereinrichtung 38 kann auch dazu dienen, die Temperaturbelastung im Belastungsraum 3 einzustellen. Zu diesem Zweck wird die Temperatur im Belastungsraum über einen über den Proben 1 angeordneten Sensor 40 gemessen und dann das Ergebnis der Steuereinrichtung 38 zur Verfügung gestellt. Die Steuereinrichtung 38 kann dann anhand des Sensors 40 die Heizung 18 im Flüssigkeitsbad 13 derart in der Heizleistung verändern, dass das erfindungsgemäße Verfahren durchgeführt werden kann, nämlich dass über die Temperatur des im Belastungsraum 3 angeordneten Flüssigkeitsbads 13 die Temperaturbelastung der Proben 1 im wesentlichen eingestellt wird. Zu diesem Zweck ist die Steuereinrichtung 38 auch mit der Heizung 18 verbunden.

Das so im Belastungsraum 3 angeordnete Flüssigkeitsbad 13 wirkt auch als Verdampfer. Insbesondere wird Wasser für das Flüssigkeitsbad 13 verwendet. Das Flüssigkeitsbad 13 kann daher ebenso dazu dienen, die Luftfeuchtigkeit im Belastungsraum 13 einzustellen. Zu diesem Zweck überträgt der Sensor 40 auch Messdaten hinsichtlich der Luftfeuchtigkeit an die Steuereinrichtung 38, anhand dieser Messdaten die Heizung 18 zur Regelung der Luftfeuchtigkeit in seinen Parametern verändert werden kann.

Außerdem kann zur Regelung des Flüssigkeitsstands der salzhaltigen Flüssigkeit 9 ein aus dem Stand der Technik bekannter Klappschwimmer 41 vorgesehen sein. Der Klappschwimmer 41 ist mit der Steuereinrichtung 38 verbunden, um an Hand der Steuerung automatisch je nach Flüssigkeitsstand über eine nicht dargestellte Pumpe salzhaltige Flüssigkeit 9 aus dem Behälter 34 und über die Zuleitung 29 in den Zerstäuber 8 eintragen zu können. Des Weiteren kann ein Überlauf 42 vorgesehen sein, um den Pegel des Flüssigkeitsbads 13 im Belastungsraum 3 konstant zu halten. Überlaufende Flüssigkeit des Wasserbads 13 kann durch die dem Überlauf 42 anschließende Ableitung 43 abgeführt werden.

## Patentansprüche

1. Vorrichtung zur Reaktionsbelastung, insbesondere Korrosionsbelastung, wenigstens einer Probe (1) mit einem einen Belastungsraum (3) aufweisenden Gehäuse (2), mit einem im Belastungsraum (3) vorgesehenen Probenhalter (4) für die Probe (1), mit einem eine Ultraschallquelle (10) aufweisenden Zerstäuber (8) zur Bildung eines die Probe (1) belastenden Aerosols (11), wobei der Zerstäuber (8) insbesondere aus einer salzhaltigen Flüssigkeit (9) das Aerosol (11) erzeugt, und mit einer Temperiereinrichtung zum Einstellen der Temperaturbelastung der Probe (1), **dadurch gekennzeichnet, dass** die Temperiereinrichtung (12) ein in der Temperatur einstellbares und insbesondere als Verdunster wirkendes Flüssigkeitsbad (13) aufweist, das im Belastungsraum (3) zumindest teilweise angeordnet ist, und das eingerichtet ist, die Temperaturbelastung der Probe (1) einzustellen.

2. Vorrichtung nach Anspruch 1, **dadurch gekennzeichnet, dass** eine Strömung zumindest eines Teils des Aerosols (11), bevor damit die Probe (1) reaktionsbelastet wird, auf das Flüssigkeitsbad (13) aufströmend gerichtet ist.

3. Vorrichtung nach Anspruch 1 oder 2, **dadurch gekennzeichnet, dass** zumindest unterhalb der Probe (1) das Flüssigkeitsbad (13) vorgesehen ist.

4. Vorrichtung nach Anspruch 1, 2 oder 3, **dadurch gekennzeichnet, dass** die Temperiereinrichtung (12) eine im Flüssigkeitsbad (13) angeordnete elektrische Heizung (18) aufweist.

5. Vorrichtung nach einem der Ansprüche 1 bis 4, **dadurch gekennzeichnet, dass** der Zerstäuber (8) im Belastungsraum (3) zum Erzeugen eines zur Probe (1) ungehindert strömenden Aerosols (11) vorgesehen ist.

6. Vorrichtung nach einem der Ansprüche 1 bis 5, **dadurch gekennzeichnet, dass** ein im Belastungsraum (3), vorzugsweise über dem Zerstäuber (8) angeordneter Ventilator (19) vorgesehen ist.

7. Vorrichtung nach einem der Ansprüche 1 bis 6, **dadurch gekennzeichnet, dass** das Gehäuse (2) eine wenigstens teilweise transparente Seitenwand (16) aufweist, auf die eine im Gehäuse (2) vorgesehene Sprüheinrichtung (21) der Vorrichtung zum Aufsprühen von Flüssigkeit gerichtet ist.

8. Vorrichtung nach Anspruch 7, **dadurch gekennzeichnet, dass** die Sprüheinrichtung (21) mit dem Flüssigkeitsbad (13) zum zumindest teilweisen Aufnehmen von Flüssigkeit verbunden ist.

9. Vorrichtung nach Anspruch 8, **dadurch gekennzeichnet, dass** eine Pumpe (23) der Sprüheinrichtung (21) außerhalb des Gehäuses (2) angeordnet ist, wobei die Saugleitung (24) der Pumpe (23) mit wenigstens einem Bodenablauf (25) des Flüssigkeitsbads (13) verbunden ist.

10. Vorrichtung nach einem der Ansprüche 1 bis 9, **dadurch gekennzeichnet, dass** der Belastungsraum (3) des Gehäuses (2) gasdicht ausgeführt ist und eine Zuleitung (33) zum Einträgen von Gas, insbesondere reaktionsförderlichem Sauerstoff oder reaktionshemmenden Stickstoff, aufweist.

11. Vorrichtung nach einem der Ansprüche 1 bis 10, **dadurch gekennzeichnet, dass** das Gehäuse (2) auf Rädern (37) steht.

12. Vorrichtung nach einem der Ansprüche 7 bis 11, **dadurch gekennzeichnet, dass** die Vorrichtung ein auf die transparente Seitenwand (16) gerichtetes und außerhalb des Belastungsraums (3) angeordnetes Bildaufzeichnungsgerät (39) und eine Steuereinrichtung (38) aufweist, die mit dem Bildaufzeichnungsgerät (39), dem Zerstäuber (8) und der Sprüheinrichtung (21) zur Ansteuerung verbunden ist, wobei die Steuereinrichtung (38) in Abhängigkeit der Ansteuerung des Zerstäubers (8) die Sprüheinrichtung (21) zur Reinigung der Seitenwand und das Bildaufzeichnungsgerät (39) zur Aufzeichnung des Reaktionsverlaufes ansteuert.

13. Verfahren zur Reaktionsbelastung, insbesondere Korrosionsbelastung, bei dem wenigstens eine Probe (1) in einem Belastungsraum (3) einer Aerosolbelastung und einer Temperaturbelastung unterworfen wird, wobei das Aerosol (11) mit Hilfe von Ultraschallschwingungen aus einer insbesondere salzhaltigen Flüssigkeit (9) zerstäubt wird, **dadurch gekennzeichnet, dass** über die Temperatur eines im Belastungsraum (3) angeordneten Flüssigkeitsbads (13) die Temperaturbelastung der Probe (1) eingestellt wird.

14. Verfahren nach Anspruch 13, **dadurch gekennzeichnet, dass** über das als Verdampfer wirkende Flüssigkeitsbad (13) die Luftfeuchtigkeit im Belastungsraum (3) eingestellt wird.

15. Verfahren nach Anspruch 13 oder 14, **dadurch gekennzeichnet**, bei dem zumindest teilweise das Aerosol (11) auf das Flüssigkeitsbad (13) strömt, bevor es die Probe (1) reaktionsbelastet.

## Claims

1. Apparatus for reaction stress, particularly corrosion stress, of at least one sample (1) with a housing (2) having a stress chamber (3), with a sample holder (4) for the sample (1) provided in the stress chamber (3), with a sprayer (8) having an ultrasound source (10) for forming an aerosol stressing the sample (1), wherein the sprayer (8) creates the aerosol (11) particularly from a saline liquid (9), and with a temperature control device for adjusting the temperature stress of the sample (1), **characterised in that** the temperature control device (12) has a liquid bath (13) whose temperature is adjustable and which acts particularly as an evaporator, which is at least partially arranged in the stress chamber (3) and which is configured to adjust the temperature stress of the sample (1).

2. Apparatus according to claim 1, **characterised in that** a flow of at least a part of the aerosol (11) is directed to flow onto the liquid bath (13) before the sample (1) is subjected to reaction-stress.

3. Apparatus according to claim 1 or 2, **characterised in that** the liquid bath (13) is provided at least below the sample (1).

4. Apparatus according to claim 1, 2 or 3, **characterised in that** the temperature control device (12) has an electric heating (18) arranged in the liquid bath (13).

5. Apparatus according to any of claims 1 to 4, **characterised in that** the sprayer (8) is provided in the stress chamber (3) for creating an aerosol (11) flowing freely to the sample (1).

6. Apparatus according to any of claims 1 to 5, **characterised in that** in the stress chamber (3) a ventilator (19) is provided, preferably over the sprayer (8).

7. Apparatus according to any of claims 1 to 6, **characterised in that** the housing (2) has an at least partially transparent side wall (16) onto which a spraying device (21) of the apparatus provided in the housing (2) is directed for spraying on liquid.

8. Apparatus according to claim 7, **characterised in that** the spraying device (21) is connected to the liquid bath (13) for at least partially absorbing liquid.

9. Apparatus according to claim 8, **characterised in that** a pump (23) of the spraying device (21) is arranged outside the housing (2), wherein the suction pipe (24) of the pump (23) is connected to at least one floor drain (25) of the liquid bath (13).

10. Apparatus according to any of claims 1 to 9, **characterised in that** the stress chamber (3) of the housing (2) is gas-proof and has a supply line (33) for supplying gas, in particular reaction-conducive oxygen or reaction-inhibiting nitrogen.

11. Apparatus according to one of claims 1 to 10, **characterised in that** the housing (2) is mounted on wheels (37).

12. Apparatus according to any of claims 7 to 11, **characterised in that** the apparatus has an image recording device (39) directed to the transparent side wall (16) and arranged outside the stress chamber (3) and a control device (38), which is connected to the image recording device (39), the sprayer (8) and the spraying device (21) for controlling, wherein the control device (38), subject to the control of the sprayer (8), controls the spraying device (21) for cleaning the side wall and the image recording device (39) for recording the reaction process.

13. Method for reaction stress, in particular corrosion stress, where at least one sample (1) is subjected to an aerosol stress and a temperature stress in a stress chamber (3), wherein the aerosol (11) is sprayed by means of ultrasonic vibration from a particularly saline liquid (9), **characterised in that** via the temperature of a liquid bath (13) arranged in the stress chamber (3), the temperature stress of the sample (1) is adjusted.

14. Method according to claim 13, **characterised in that** the humidity in the stress chamber (3) is adjusted via the liquid bath (13) acting as an evaporator.

15. Method according to claim 13 or 14, **characterised in that** the aerosol (11) at least partially flows onto the liquid bath (13) before the sample (1) is subjected to reaction stress.

## Revendications

1. Dispositif et procédé d'essai réactionnel, en particulier d'essai en corrosion, d'au moins un échantillon (1) avec un boîtier (2) présentant une chambre d'essai (3), avec un support (4) prévu dans la chambre d'essai (3) pour recevoir l'échantillon (1), avec un atomiseur (8) présentant une source d'ultrasons (10) pour former un aérosol (11) imposant une contrainte à l'échantillon (1), sachant que l'atomiseur (8) génère l'aérosol (11) notamment à partir d'un liquide (9) contenant du sel, et avec un équipement de thermostatisation pour régler la contrainte en température de l'échantillon (1), **caractérisé en ce que** l'équipement de thermostatisation (12) présente un bain de liquide (13) à température réglable et agissant en particulier comme évaporateur, bain qui est agencé au moins en partie dans la chambre d'essai (3) et qui est configuré de sorte à ajuster la contrainte en température imposée à l'échantillon (1).

2. Dispositif selon la revendication 1, **caractérisé en ce qu'**un flux d'au moins une partie de l'aérosol (11), avant que l'échantillon (1) soit soumis à l'essai réactionnel avec cette dernière, est braqué vers le bain de liquide (13) pour affluer dessus.

3. Dispositif selon la revendication 1 ou 2, **caractérisé en ce que** le bain de liquide (13) est prévu au moins en dessous de l'échantillon (1).

4. Dispositif selon la revendication 1, 2 ou 3, **caractérisé en ce que** l'équipement de thermostatisation (12) présente un chauffage électrique (18) agencé dans le bain de liquide (13).

5. Dispositif selon l'une des revendications 1 à 4, **caractérisé en ce que** l'atomiseur (8) dans la chambre d'essai (3) est prévu pour générer un aérosol (11) affluant sans obstacle en direction de l'échantillon (1).

6. Dispositif selon l'une des revendications 1 à 5, **caractérisé en ce qu'**un ventilateur (19) est agencé dans la chambre d'essai (3), de préférence au-dessus de l'atomiseur (8).

7. Dispositif selon l'une des revendications 1 à 6, **caractérisé en ce que** le boîtier (2) présente une paroi latérale (16) au moins en partie transparente vers laquelle est braqué un équipement de pulvérisation (21), prévu dans le boîtier (2), du dispositif servant à pulvériser le liquide.

8. Dispositif selon la revendication 7, **caractérisé en ce que** l'équipement de pulvérisation (21) est relié au bain de liquide (13) pour capter au moins en partie du liquide.

9. Dispositif selon la revendication 8, **caractérisé en ce qu'**une pompe (23) de l'équipement de pulvérisation (21) est agencée en dehors du boîtier (2), sachant que la conduite d'aspiration (24) de la pompe (23) est reliée à au moins un avaloir de fond (25) du bain de liquide (13).

10. Dispositif selon l'une des revendications 1 à 9, **caractérisé en ce que** la chambre d'essai (3) du boîtier (2) est réalisée étanche aux gaz et présente une conduite d'amenée (33) pour introduire le gaz, en particulier de l'oxygène promoteur de réaction ou de l'azote inhibiteur de réaction.

11. Dispositif selon l'une des revendications 1 à 10, **caractérisé en ce que** le boîtier (2) repose sur des roues (37).

12. Dispositif selon l'une des revendications 7 à 11, **caractérisé en ce que** le dispositif présente un appareil d'enregistrement d'images (39) braqué vers la paroi (16) latérale transparente et agencé hors de la chambre d'essai (3), et un équipement de commande (38) relié avec l'appareil enregistreur d'images (39), l'atomiseur (8) et l'équipement de pulvérisation (21) pour les exciter, sachant que l'équipement de commande (38) pilote, en fonction de l'excitation de l'atomiseur (8), l'équipement pulvérisateur (21) servant à nettoyer la paroi latérale, et l'appareil enregistreur d'images (39) pour enregistrer le déroulement de la réaction.

13. Procédé d'essai réactionnel, en particulier d'essai en corrosion au cours duquel au moins un échantillon (1) est soumis dans une chambre d'essai (3) à la contrainte d'un aérosol et à une contrainte en température, sachant que l'aérosol (11) est atomisé à l'aide de vibrations ultrasoniques depuis un liquide (9) notamment salin, **caractérisé en ce que** via la température d'un bain de liquide (13) agencé dans la chambre d'essai (3), la contrainte en température de l'échantillon (1) est ajustée.

14. Procédé selon la revendication 13, **caractérisé en ce que** via le bain de liquide (13) officiant d'évaporateur, on ajuste l'humidité de l'air dans la chambre d'essai (3).

15. Procédé selon la revendication 13 ou 14, par lequel au moins en partie l'aérosol (11) afflue sur le bain de liquide (13) avant de soumettre l'échantillon (1) à l'essai réactionnel.
